# EUROPÄISCHE PATENTSCHRIFT

(11) **EP 1 299 223 B1**
(45) Veröffentlichungstag und Bekanntmachung des Hinweises auf die Patenterteilung: **16.02.2005**
(21) Anmeldenummer: 01953819.8
(22) Anmeldetag: 06.07.2001
(51) Int. Cl.: B29C 49/54, B29C 33/30

(54) **VORRICHTUNG ZUR BLASFORMUNG VON BEHÄLTERN**
DEVICE FOR BLOW-MOLDING CONTAINERS
DISPOSITIF POUR LE MOULAGE DE CONTENANTS PAR SOUFFLAGE

(30) Priorität: 08.07.2000 DE 10033412
(43) Veröffentlichungstag der Anmeldung: 09.04.2003
(73) Patentinhaber: SIG Corpoplast GmbH & Co. KG, 22145 Hamburg (DE)
(72) Erfinder: LINKE, Michael, 22926 Ahrensburg (DE); MÜLLER, Hartwig, 22952 Lütjensee (DE); LITZENBERG, Michael, 21502 Geesthacht (DE); GERHARDS, Martin, 22081 Hamburg (DE)
(74) Vertreter: Klickow, Hans-Henning, Dr.-Ing.
(86) Internationale Anmeldenummer: PCT/DE2001/002395
(87) Internationale Veröffentlichungsnummer: WO 2002/004194

(56) Entgegenhaltungen:
- FR-A- 2 720 680
- US-A- 5 411 699
- US-A- 5 560 939
- US-A- 5 762 981

## Beschreibung

Die Erfindung betrifft eine Vorrichtung zur Blasformung von Behältern aus einem thermoplastischen Material, die mindestens eine Blasstation mit mindestens einer Blasform aufweist, die aus mindestens zwei von Trägern gehalterten Blasformsegmenten ausgebildet ist und die einen Bodeneinsatz aufweist, der in Richtung einer Längsachse der Blasform positionierbar angeordnet ist und der von einer Grundplatte gehaltert ist, die den Bodeneinsatz mit einer Positioniereinrichtung verbindet.

Eine Vorrichtung dieser Art ist beispielsweise aus den Druckschriften DE-A-4 212 583, US-A-5 762 981 oder US-A- 5 411 699 bekannt.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden.

Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Aus der US-A-5,762,981 ist bereits eine Vorrichtung zur Blasformung von Behältern aus einem thermoplastischen Material bekannt, bei der eine Blasstation mit einer Blasform verwendet wird und bei der die Blasform aus mindestens zwei von Trägern gehalterten Blasformsegmenten besteht. Die Blasform ist mit einem Bodeneinsatz versehen, der in Richtung einer Längsachse des Behälters positionierbar angeordnet ist. Der Bodeneinsatz wird von einer Grundplatte gehaltert, die den Bodeneinsatz mit einer Positioniereinrichtung verbindet.

In der US-A-5,411,699 wird ebenfalls eine Blasstation beschrieben, die von Trägern gehalterte Blasformsegmente sowie einen in Richtung der Längsachse der Blasform positionierbaren Bodenseinsatz aufweist. Der Bodeneinsatz wird von einer Grundplatte gehaltert und ist mit dieser Grundplatte über eine Schraubverbindung gekoppelt, die eine feste Verbindung bereitstellt.

Aus der US-A-5,560,939 ist ein automatisches Positioniersystem für Formeinsätze einer Spritzgußeinrichtung bekannt.

In der FR-A-2 720 680 wird ein im Bereich einer Blasstation verwendbarer Bodeneinsatz beschrieben, der von einem Träger gehaltert ist und bei der eine Verbindung der einzelnen Bauelemente durch eine Verschraubung erfolgt.

Eine übliche Blasform besteht zusätzlich zu den beiden Blasformsegmenten aus einem positionierbaren Bodeneinsatz. Ein derartiger Bodeneinsatz ist erforderlich, wenn im Bodenbereich des herzustellenden Behälters Hinterschneidungen in einer horizontalen Richtung auftreten. Nach einer erfolgten Behälterformung wird der Bodeneinsatz angehoben und anschließend werden die beiden Blasformsegmente voneinander entfernt, um eine Entnahme des geblasenen Behälter aus der Blasstation durchführen zu können. Üblicherweise ist der Bodeneinsatz mit einer Grundplatte verschraubt. Zusätzlich sind Schraubverbindungen vorgesehen, um Kühlwasserkanäle innerhalb des Bodeneinsatzes an geeignete versorgungsleitungen anzuschließen.

Bei einem Produktwechsel ist es erforderlich, sowohl die Blasformsegmente als auch den Bodeneinsatz auszutauschen, um die Behälterkontur des neuen Produktes vorzugeben. Aufgrund der vorgesehenen Verschraubung des Bodeneinsatzes mit der Grundplatte sowie der Verschraubungen der Anschlüsse für das Kühlmedium ist ein entsprechender Austausch eines Bodeneinsatzes relativ arbeitsaufwendig.

Aufgabe der vorliegenden Erfindung ist es daher, eine Vorrichtung der einleitend genannten Art derart zu konstruieren, daß ein Auswechseln des Bodeneinsatzes mit vermindertem Arbeitsaufwand erfolgen kann.

Diese Aufgabe wird erfindungsgemäß dadurch gelöst, daß die Grundplatte von einem Kupplungsprofil mit dem Bodeneinsatz verbunden ist, das aus einem mit der Grundplatte verbundenen Kopplungselement sowie einem mit dem Bodeneinsatz verbundenen Gegenelement ausgebildet ist und das von einem Handhebel betätigbar ist, und daß mit einem Abstand zum Kupplungsprofil mindestens zwei hohle Kupplungsstecker angeordnet sind, die in selbstdichtende Kupplungsbuchsen einführbar sind.

Vorteilhafte Weiter bildungen der Erfindung sind Gegenstand der abhängigen Ansprüche.

Durch die Verwendung des Kupplungsprofils, das aus dem Kopplungselement sowie dem Gegenelement besteht, ist es möglich, eine mechanische Verbindung zwischen der Grundplatte und dem Bodeneinsatz mit geringem Arbeitsaufwand und sehr kurzem Zeitbedarf durchzuführen, beziehungsweise die Verbindung wieder aufzuheben. Die Verwendung der Kupplungsstecker sowie der Kupplungsbuchsen führt in einem Arbeitsschritt gemeinsam mit der Herstellung der Kupplungsverbindung auch die erforderlichen Anschlüsse für die Zufuhr und die Ableitung des Kühlwassers durch.

Der Handhebel erlaubt eine Betätigung der Kupplung mit sehr geringem Kraftaufwand. Beim Zusammenstecken des Kupplungselementes und des Gegenelementes werden gleichzeitig auch die Kupplungsstecker in die zugeordneten Kupplungsbuchsen eingeführt. Durch ein Umlegen des Handhebels erfolgt die eigentliche Arretierung, beziehungsweise bei umgekehrter Arbeitsreihenfolge eine Freigabe der Arretierung.

Eine kompakte Kupplungseinrichtung wird dadurch bereitgestellt, daß das Kopplungselement spreizbar ausgebildet ist.

Eine besonders zuverlässige und verschleißarme Kupplung kann dadurch bereitgestellt werden, daß das Kopplungselement mindestens eine Schrägflanke aufweist, die mindestens eine Kugel quer zu einer Längsachse positioniert.

Eine Leichtgängigkeit der Kupplung, die eine manuelle Betätigung unterstützt, kann auch dadurch erreicht werden, daß das Kopplungselement im wesentlichen aus einem Grundkörper und einer den Grundkörper in Richtung der Längsachse verschieblich lagernden Führung ausgebildet ist und daß die Führung mindestens eine schräg zur Längsachse orientierte Führungsausnehmung zur Lagerung mindestens einer Kugel aufweist.

Zur Gewährleistung einer definierten Zuordnung der Kupplungsstecker und der Kupplungsbuchsen wird vorgeschlagen, daß die Grundplatte mindestens eine Verdrehsicherung zur Positionierungsfestlegung relativ zum Bodeneinsatz aufweist.

Die Verdrehsicherung kann beispielsweise dadurch realisiert werden, daß die Verdrehsicherung als ein vorstehendes Profil ausgebildet ist, das in ein Gegenprofil einführbar ist.

Eine Bereitstellung einer verdrehsicherung ohne Verwendung zusätzlicher Bauteile ist dadurch möglich, daß die Drehsicherung durch eine unsymmetrische Anordnung der Kupplungsstecker ausgebildet ist.

Eine typische Anwendung besteht darin, daß die Kupplungsstecker als Teile einer wasserversorgung ausgebildet sind.

Zur Gewährleistung einer Spielfreiheit wird vorgeschlagen, daß mit einem Abstand zum Kupplungsprofil mindestens ein Vorspannelement angeordnet ist.

Eine hohe Kippsicherheit kann dadurch erreicht werden, daß mindestens drei Vorspannelemente mit einem Abstand zum Kupplungsprofil angeordnet sind.

Ebenfalls trägt zur Gewährleistung einer Verkippungssicherheit bei, daß die Vorspannelemente mit einem geringen Abstand zu einem Umfang der Grundplatte angeordnet sind.

In der zeichnung sind Ausführungsbeispiele der Erfindung schematisch dargestellt. Es zeigen:
- Fig. 1:: Eine perspektivische Darstellung einer Blasstation zur Herstellung von Behältern aus Vorformlingen,
- Fig. 2:: einen Längsschnitt durch eine Blasform, in der ein Vorformling gereckt und expandiert wird,
- Fig. 3:: eine Skizze zur Veranschaulichung eines grundsätzlichen Aufbaus einer Vorrichtung zur Blasformung von Behältern,
- Fig. 4:: eine Draufsicht auf eine Grundplatte mit Handhebel,
- Fig. 5:: einen Querschnitt gemäß Schnittlinie V-V in Fig. 4,
- Fig. 6:: einen Querschnitt gemäß Schnittlinie VI-VI in Fig. 4,
- Fig. 7:: einen gedrehten Querschnitt gemäß Schnittlinie VII-VII in Fig. 4
und
- Fig. 8:: eine vergrößerte und schematisierte Darstellung zur Veranschaulichung des Eingreifens des Kopplungselementes in das Gegenelement.

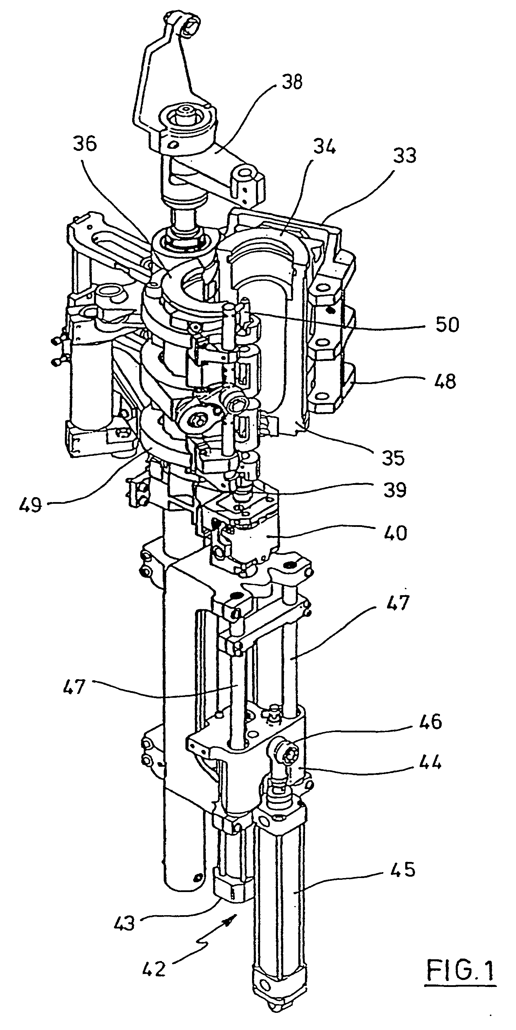

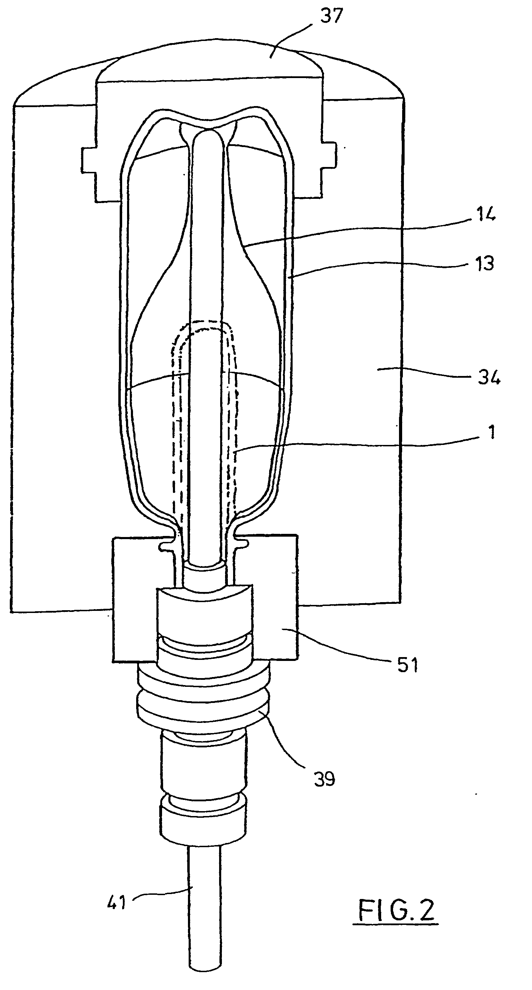

Der prinzipielle Aufbau einer Vorrichtung zur Umformung von Vorformlingen (1) in Behälter (13) ist in Fig. 1 und in Fig. 2 dargestellt.

Die Vorrichtung zur Formung des Behälters (13) besteht im wesentlichen aus einer Blasstation (33), die mit einer Blasform (34) versehen ist, in die ein Vorformling (1) einsetzbar ist. Der Vorformling (1) kann ein spritzgegossenes Teil aus Polyäthylenterephthalat sein. Zur Ermöglichung eines Einsetzens des Vorformlings (1) in die Blasform (34) und zur Ermöglichung eines Herausnehmens des fertigen Behälters besteht die Blasform (34) aus Blasformsegmenten (35,36) und einem Bodeneinsatz (37), der von einer Hubvorrichtung (38) positionierbar ist. Der vorformling (1) kann im Bereich der Blasstation (33) von einem Transportdorn (39) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (34) einzusetzen.

Zur Ermöglichung einer Druckluftzuleitung ist unterhalb des Transportdornes (39) ein Anschlußkolben (40) angeordnet, der dem Vorformling (1) Druckluft zuführt und gleichzeitig eine Abdichtung relativ zum Transportdorn (39) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (41), die von einem Zylinder (42) positioniert wird. Grundsätzlich ist es aber auch denkbar, eine mechanische Positionierung der Reckstange (41) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (33) auf einem rotierenden Blasrad angeordnet sind. Eine Verwendung von Zylindern (42) ist zweckmäßig, wenn ortsfest angeordnete Blasstationen (33) vorgesehen sind.

Bei der in Fig. 1 dargestellten Ausführungsform ist das Recksystem derart ausgebildet, daß eine Tandem-Anordnung von zwei Zylindern (42) bereitgestellt ist. Von einem Primärzylinder (43) wird die Reckstange (41) zunächst vor Beginn des eigentlichen Reckvorganges bis in den Bereich des Bodens (7) des Vorformlings (1) gefahren. Während des eigentlichen Reckvorganges wird der Primärzylinder (43) mit ausgefahrener Reckstange gemeinsam mit einem den Primärzylinder (43) tragenden Schlitten (44) von einem Sekundärzylinder (45) oder über eine Kurvensteuerung positioniert. Insbesondere ist daran gedacht, den Sekundärzylinder (45) derart kurvengesteuert einzusetzen, daß von einer Führungsrolle (46), die während der Durchführung des Reckvorganges an einer Kurvenbahn entlang gleitet, eine aktuelle Reckposition vorgegeben wird. Die Führungsrolle (46) wird vom Sekundärzylinder (45) gegen die Führungsbahn gedrückt. Der Schlitten (44) gleitet entlang von zwei Führungselementen (47).

Nach einem Schließen der im Bereich von Trägern (48,49) angeordneten Blasformsegmente (35,36) erfolgt eine Verriegelung der Träger (48) relativ zueinander mit Hilfe einer Verriegelungseinrichtung (50).

Zur Anpassung an unterschiedliche Formen des Mündungsabschnittes (2) ist gemäß Fig. 2 die Verwendung separater Gewindeeinsätze (51) im Bereich der Blasform (34) vorgesehen.

Fig. 2 zeigt zusätzlich zum geblasenen Behälter (13) auch gestrichelt eingezeichnet den Vorformling (1) und schematisch eine sich entwickelnde Behälterblase (14).

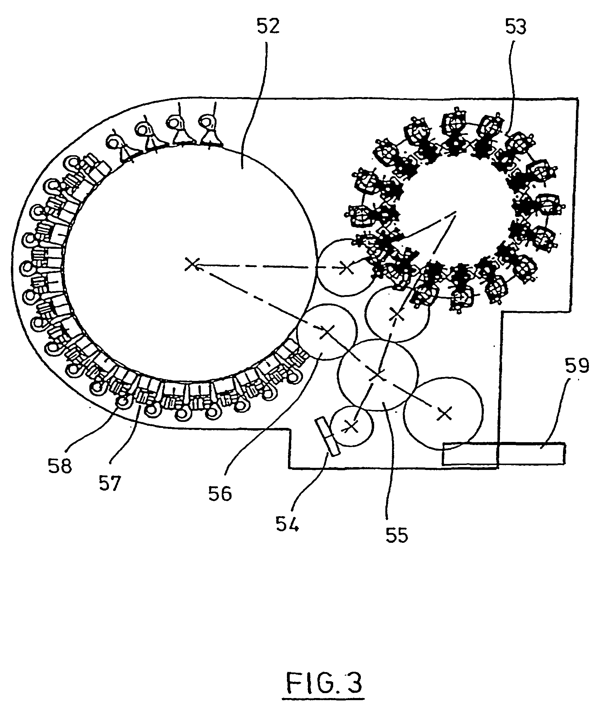

Fig. 3 zeigt den grundsätzlichen Aufbau einer Blasmaschine, die mit einem rotierenden Heizrad (52) sowie einem rotierenden Blasrad (53) versehen ist. Ausgehend von einer Vorformlingseingabe (54) werden die Vorformlinge (1) von Übergaberädern (55,56) in den Bereich des Heizrades (52) transportiert. Entlang des Heizrades (52) sind Heizstrahler (57) sowie Gebläse (58) angeordnet, um die Vorformlinge (1) zu temperieren. Nach einer ausreichenden Temperierung der Vorformlinge (1) werden diese an das Blasrad (53) übergeben, in dessen Bereich die Blasstationen (33) angeordnet sind. Die fertig geblasenen Behälter (13) werden von weiteren Übergaberädern einer Ausgabestrecke (59) zugeführt.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

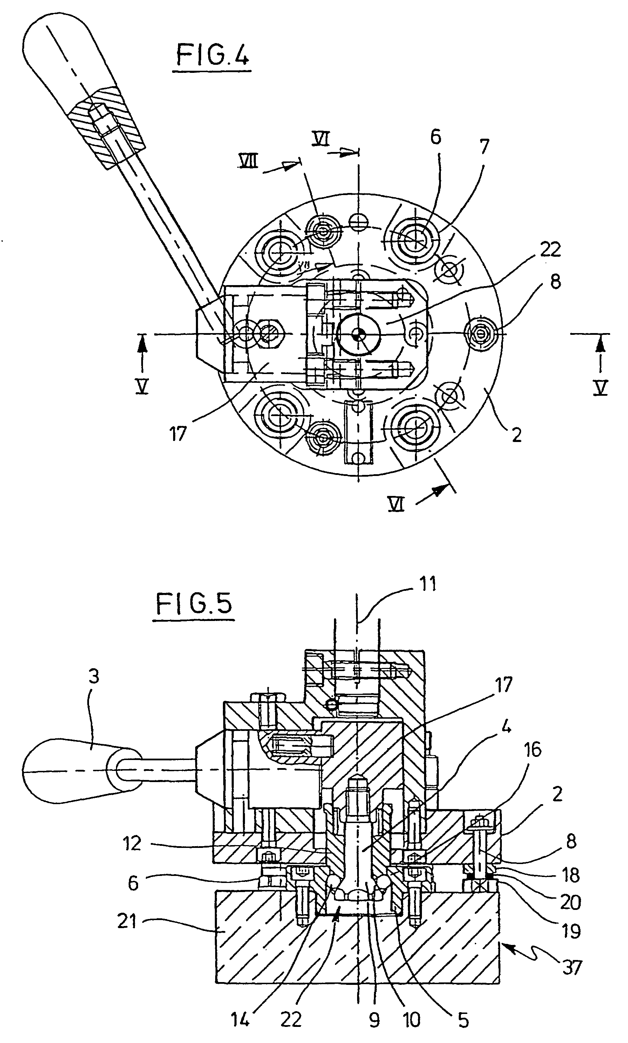

Fig. 4 zeigt eine Draufsicht auf eine Grundplatte (2) mit Handhebel (3), die zur Verbindung des Bodeneinsatzes (37) mit der Hubvorrichtung (38) vorgesehen ist. Zur Verbindung der Grundplatte (2) mit dem Bodeneinsatz (37) weist die Grundplatte (2) ein Kopplungselement (4) auf, das in ein Gegenelement (5) des Bodeneinsatzes (37) eingreift. Das Kopplungselement (4) und das Gegenelement (5) bilden gemeinsam ein Kupplungsprofil (22) aus.

Der Bodeneinsatz (37) ist bei der dargestellten Ausführungsform mit hohlen Kupplungssteckern (6) versehen, die in selbstdichtende Buchsen (7) der Grundplatte (2) eingreifen. Die Kupplungsstecker (6) und die Buchsen (7) dienen zur Zuführung und zur Ableitung eines Temperiermediums in den Bereich des Bodeneinsatzes (37). Insbesondere ist daran gedacht, die Kupplungsstecker (6) unsymmetrisch anzuordnen, um eine Bodenformorientierung bereitzustellen. Grundsätzlich ist es ebenfalls denkbar, die Kupplungsstecker (6) im Bereich der Grundplatte (2) und die Buchsen (7) im Bereich des Bodeneinsatzes (37) zu positionieren.

Fig. 4 zeigt ebenfalls die Anordnung von Vorspannelementen (8), die in einem arretierten Zustand des Bodeneinsatzes (7) eine Spielfreiheit gewährleisten. Die Vorspannelemente (8) können beispielsweise als Tellerfedern, Druckfedern oder Spiralfedern ausgebildet sein.

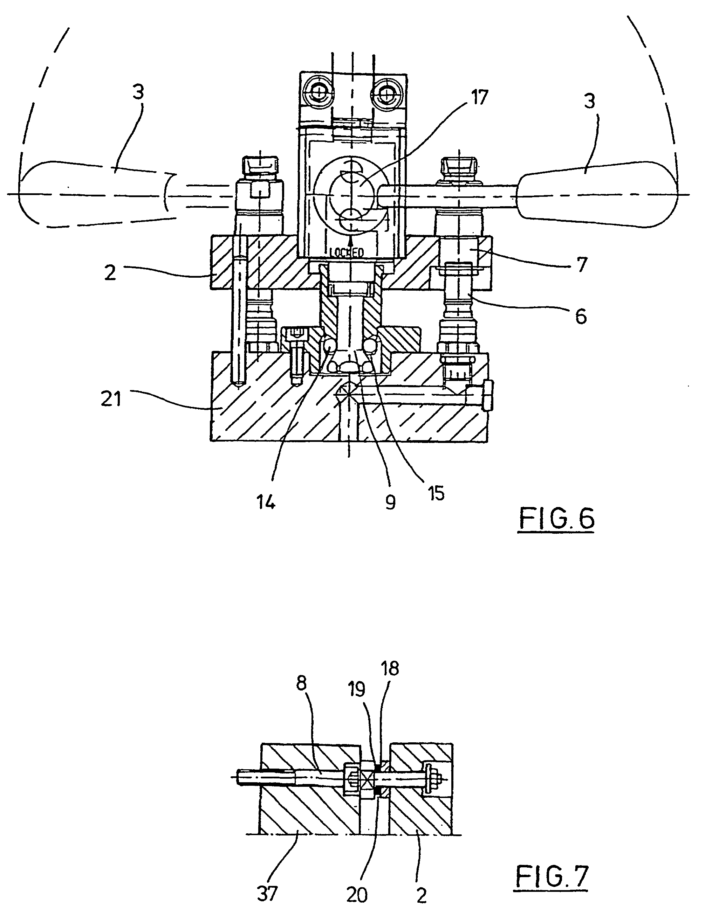

Aus der Querschnittdarstellung in Fig. 5 ist erkennbar, daß das Kopplungselement (4) bei der dargestellten Ausführungsform einen Grundkörper (9) aufweist, der im Bereich seiner in das Gegenelement (5) einführbaren Ausdehnung mit Schrägflanken (10) versehen ist. Der Grundkörper (9) ist in Richtung einer Längsachse (11) in einer Führung (12) verschieblich gelagert und die Schrägflanken (10) wirken mit Kugeln (14) zusammen, die in schräg angeordneten Führungsausnehmungen (15) des Grundkörpers (9) gelagert sind. Bei einer Verschiebung des Grundkörpers (9) in die Führung (12) hinein werden durch das Zusammenwirken der Schrägflanken (10), der Kugeln (14) sowie der Führungsausnehmungen (15) die Kugeln (14) quer zur Längsachse (11) nach außen gedrückt und hintergreifen einen Kragen (16) des Gegenelementes (5). Hierdurch wird eine formschlüssige Verbindung zwischen der Grundplatte (2) und dem Bodeneinsatz (37) bereitgestellt.

Die Bewegung des Grundkörpers (9) in Richtung der Längsachse (11) wird durch eine Drehbewegung des Handhebels (3) hervorgerufen, wobei die Drehbewegung des Handhebels (3) über eine Umlenkung (17) auf den Grundkörpern (9) übertragen wird.

Alternativ zu einer Realisierung des Kopplungselementes (4) unter Verwendung der Schrägflanken (10) sowie der Kugeln (14) ist es beispielsweise auch möglich, die Tragplatte (21) beziehungsweise den Bodeneinsatz (37) mit einer Verbindungssäule zu versehen, die in die Grundplatte (2) hineinragt und die in Richtung ihrer Längsachse mit mindestens einer Hinterschneidung versehen ist. Die Hinterschneidung kann beispielsweise als eine seitliche Kerbe oder Ausfräsung realisiert sein. Gemäß einer derartigen Ausführungsform ist vorgesehen, daß bei einer Betätigung des Handhebels (3) im wesentlichen in horizontaler Richtung ein Verriegelungselement positioniert wird, daß in einem verriegelten Zustand in das Profil der Verbindungssäule eingreift und zu einer formschlüssigen Verbindung zwischen der Grundplatte (2) und der Tragplatte (21) beziehungsweise dem Bodeneinsatz (37) führt. Eine ausreichende Spielfreiheit wird auch bei dieser Ausführungsform durch vorspannelemente (8) gewährleistet. Das Arretierelement kann beispielsweise als ein Bolzensegment realisiert sein. Sowohl die Formgebung des Hinterschneidungsprofils der verbindungssäule als auch die Gestaltung des Arretierungselementes sind aber vielfach variierbar. Es ist lediglich für eine ausreichende Anpassung der jeweiligen Formgestaltungen aneinander zu sorgen.

Aus Fig. 5 ist ebenfalls erkennbar, daß bei dieser Ausführungsform die Vorspannelemente (8) im wesentlichen bolzenförmig ausgebildet sind und zwischen Andruckflanken (18, 19) Federelemente (20) aufweisen, die bei einem Zusammenfügen der Grundplatte (2) und des Bodeneinsatzes (37) zusammengedrückt werden. Ebenfalls ist erkennbar, daß der Bodeneinsatz (37) eine Tragplatte (21) aufweist, die die zur Konturgebung des Behälters (13) verwendete Bodenform trägt, die bei der abgebildeten Darstellung allerdings nicht gezeigt ist.

Fig. 6 zeigt den Handhebel (3) in durchzogenen Linien in einer Lösepositionierung und in gestrichelten Linien in der zu Fig. 5 korrespondierenden Arretierungspositionierung. Es ist aus Fig. 6 erkennbar, daß der Grundkörper (9) aus der Führung (12) herausgeschoben ist und daß hierdurch die Kugeln (14) so tief in die Führungsausnehmungen (15) hineinrutschen konnten, daß keine Hinterschneidung mehr mit dem Kragen (16) vorliegt. In dieser Positionierung könnte der Bodeneinsatz (37) von der Grundplatte (2) abgenommen werden.

Fig. 7 zeigt in einer vergrößerten und gedrehten Darstellung das Zusammenwirken der Andruckflanken (18, 19), der Vorspannelemente (8) und der zugeordneten Federelemente (20).

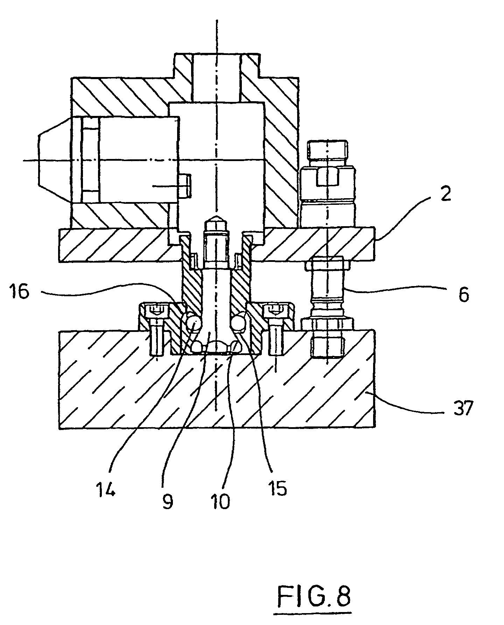

Fig. 8 veranschaulicht nochmals die Positionierung des Grundkörpers (9) relativ zur Führung (12) in einem Zustand, in dem der Bodeneinsatz (37) von der Grundplatte (2) abgenommen werden kann.

Die Anordnung der Vorspannelemente (8) erfolgt vorzugsweise mit einem lediglich geringen Abstand zu einem Außenumfang der Grundplatte (2) beziehungsweise des Bodeneinsatzes (37), um eine zusätzliche Sicherung gegenüber einem verkippen bereitzustellen. Unter einem geringen Abstand wird hierbei verstanden, daß der Abstand der Vorspannelemente (8) zum Außenumfang der Grundplatte (2) geringer als der Abstand zum Kupplungsprofil (22) dimensioniert ist. Die Verwendung der in den Ausführungsbeispielen eingezeichneten drei Vorspannelemente (8) trägt ebenfalls zu einer vergrößerten Verkippungssicherheit bei.

Alternativ zur Verwendung der in Fig. 5 dargestellten separaten Federelemente (20) bei den Vorspannelementen (8) ist es auch möglich, im Bereich des Kupplungssteckers (6) oder der Kupplungsbuchsen (7) Federn anzuordnen und diese zum Aufbau der vorspannung zu nutzen.

## Patentansprüche

1. Vorrichtung zur Blasformung von Behältern (13) aus einem thermoplastischen Material, die mindestens eine Blasstation (33) mit mindestens einer Blasform (34) aufweist, die aus mindestens zwei von Trägern (48, 49) gehalterten Blasformsegementen (35, 36) ausgebildet ist und die einen Bodeneinsatz (37) aufweist, der in Richtung einer Längsachse der Blasform (34) positionierbar angeordnet ist und der von einer Grundplatte (2) gehaltert ist, die den Bodeneinsatz (37) mit einer Positioniereinrichtung verbindet, **dadurch gekennzeichnet, daß** die Grundplatte (2) von einem Kupplungsprofil (22) mit dem Bodeneinsatz (37) verbunden ist, das aus einem mit der Grundplatte (2) verbundenen Kopplungselement (4) sowie einen mit dem Bodeneinsatz (37) verbundenen Gegenelement (5) ausgebildet ist und das von einem Handhebel (3) betätigbar ist, und daß mit einem Abstand zum Kupplungsprofil (22) mindestens zwei hohle Kupplungsstecker (6) angeordnet sind, die in selbstdichtende Kupplungsbuchsen (7) einführbar sind.

2. Vorrichtung nach Anspruch 1, **dadurch gekennzeichnet, daß** das Kopplungselement (4) spreizbar ausgebildet ist.

3. Vorrichtung nach Anspruch 1 oder 2, **dadurch gekennzeichnet, daß** das Kopplungselement (4) mindestens eine Schrägflanke (10) aufweist, die mindestens eine Kugel (14) quer zu einer Längsachse (11) positioniert.

4. Vorrichtung nach einem der Ansprüche 1 bis 3, **dadurch gekennzeichnet, daß** das Kopplungselement (4) im wesentlichen aus einem Grundkörper (9) und einer den Grundkörper (9) in Richtung der Längsachse (11) verschieblich lagernden Führung (12) ausgebildet ist und daß die Führung (12) mindestens eine schräg zur Längsachse (11) orientierte Führungsausnehmung (15) zur Lagerung mindestens einer Kugel (14) aufweist.

5. Vorrichtung nach einem der Ansprüche 1 bis 4, **dadurch gekennzeichnet, daß** die Grundplatte (2) mindestens eine Verdrehsicherung zur Positionierungsfestlegung relativ zum Bodeneinsatz (37) aufweist.

6. Vorrichtung nach Anspruch 5, **dadurch gekennzeichnet, daß** die verdrehsicherung als ein vorstehendes Profil ausgebildet ist, das in ein Gegenprofil einführbar ist.

7. Vorrichtung nach Anspruch 5, **dadurch gekennzeichnet, daß** eine Bodenformorientierung durch eine unsymmetrische Anordnung der Kupplungsstecker (6) ausgebildet ist.

8. Vorrichtung nach einem der Ansprüche 1 bis 7, **dadurch gekennzeichnet, daß** die Kupplungsstecker (6) als Teile einer Wasserversorgung ausgebildet sind.

9. Vorrichtung nach einem der Ansprüche 1 bis 8, **dadurch gekennzeichnet, daß** mit einem Abstand zum Kupplungsprofil (22) mindestens ein Vorspannelement (8) angeordnet ist.

10. Vorrichtung nach Anspruch 9, **dadurch gekennzeichnet, daß** mindestens drei Vorspannelemente (8) mit einem Abstand zum Kupplungsprofil (22) angeordnet sind.

11. Vorrichtung nach Anspruch 9 oder 10, **dadurch gekennzeichnet, daß** die Vorspannelemente (8) mit einem geringen Abstand zu einem Umfang der Grundplatte (2) angeordnet sind.

## Claims

1. A device for blow moulding containers (13) of a thermoplastics material, which comprises at least one blow moulding station (33) with at least one blow mould (34), which is formed of at least two blow mould segments (35, 36) supported by supports (48, 49) and which comprises a base insert (37), which is arranged so as to be positionable in the direction of a longitudinal axis of the blow mould (34) and which is supported by a base plate (2), which connects the base insert (37) with a positioning means, **characterised in that** the base plate (2) is connected with the base insert (37) by a coupler profile (22), which is formed of a coupling element (4) connected with the base plate (2) and a mating element (5) connected with the base insert (37) and which may be actuated by a hand lever (3), and **in that** at least two hollow coupler plugs (6) are arranged at a distance from the coupler profile (22) and may be introduced into self-sealing coupler sockets (7).

2. A device according to claim 1, **characterised in that** the coupling element (4) is of expandable construction.

3. A device according to claim 1 or claim 2, **characterised in that** the coupling element (4) comprises at least one inclined side (10), which positions at least one ball (14) transversely relative to a longitudinal axis (11).

4. A device according to any one of claims 1 to 3, **characterised in that** the coupling element (4) is formed substantially of a base member (9) and a guide (12) accommodating the base member (9) displaceably in the direction of the longitudinal axis (11) and **in that** the guide (12) comprises at least one guide recess (15) oriented obliquely to the longitudinal axis (11) for accommodating at least one ball (14).

5. A device according to any one of claims 1 to 4, **characterised in that** the base plate (2) comprises at least one antitwist protection means for fixing its position relative to the base insert (37).

6. A device according to claim 5, **characterised in that** the antitwist protection means takes the form of a projecting profile, which may be introduced into a mating profile.

7. A device according to claim 5, **characterised in that** base shape orientation is provided by an asymmetrical arrangement of the coupler plugs (6).

8. A device according to any one of claims 1 to 7, **characterised in that** the coupler plugs (6) take the form of parts of a water supply.

9. A device according to any one of claims 1 to 8, **characterised in that** at least one pretensioning element (8) is arranged at a distance from the coupler profile (22).

10. A device according to claim 9, **characterised in that** at least three pretensioning elements (8) are arranged at a distance from the coupler profile (22).

11. A device according to claim 9 or claim 10, **characterised in that** the pretensioning elements (8) are arranged at a short distance from a periphery of the base plate (2).

## Revendications

1. Dispositif pour le moulage par soufflage de récipients (13) à partir d'une matière thermoplastique, qui présente au moins un poste de soufflage (33) avec au moins un moule de soufflage (34), qui est constitué d'au moins deux segments (35, 36) de moule de soufflage supportés par des supports (48, 49), et qui présente un insert de fond (37) qui est agencé de manière à pouvoir être positionné dans la direction d'un axe longitudinal du moule de soufflage (34), et qui est maintenu par une plaque de base (2) qui relie l'insert de fond (37) à un moyen de positionnement, **caractérisé en ce que** la plaque de base (2) est reliée à l'insert de fond (37) par une section de couplage profilée (22) qui est constituée d'un organe de couplage (4) relié à la plaque de base (2), de même que d'un contre-organe (5) relié à l'insert de fond (37), et peut être actionnée par un levier manuel (3), et **en ce qu'**au moins deux chevilles d'accouplement creuses (6) sont agencées à distance de la section de couplage profilée (22), lesquelles peuvent être introduites dans des douilles de couplage (7) auto-scellantes.

2. Dispositif selon la revendication 1, **caractérisé en ce que** l'organe de couplage (4) est réalisé expansible.

3. Dispositif selon la revendication 1 ou 2, **caractérisé en ce que** l'organe de couplage (4) présente au moins un flanc oblique (10) qui positionne au moins une bille (14) perpendiculairement par rapport à un axe longitudinal (11).

4. Dispositif selon l'une des revendications 1 à 3, **caractérisé en ce que** l'organe de couplage (4) est formé essentiellement d'un corps de base (9) et d'un guide (12) supportant le corps de base (9) de manière mobile dans la direction de l'axe longitudinal (11), et **en ce que** le guide (12) présente au moins un évidement (15) orienté en oblique par rapport à l'axe longitudinal (11), pour recevoir au moins une bille (14).

5. Dispositif selon l'une des revendications 1 à 4, **caractérisé en ce que** la plaque de base (2) présente au moins un contre une rotation, pour définir un positionnement par rapport à l'insert de fond (37).

6. Dispositif selon la revendication 5, **caractérisé en ce que** le moyen de sécurité contre une rotation est réalisé sous la forme d'un profil en saillie, qui peut être introduit dans un contre-profil.

7. Dispositif selon la revendication 5, **caractérisé en ce qu'**un dispositif d'orientation du moule de base est formé par une disposition asymétrique des chevilles d'accouplement (6).

8. Dispositif selon l'une des revendications 1 à 7, **caractérisé en ce que** les chevilles d'accouplement (6) sont réalisées sous la forme d'une partie d'une alimentation en eau.

9. Dispositif selon l'une des revendications 1 à 8, **caractérisé en ce qu'**au moins un organe de précontrainte (8) est agencé à distance de la section de couplage profilée (22).

10. Dispositif selon la revendication 9, **caractérisé en ce qu'**au moins trois organes de précontrainte (8) sont agencés à distance de la section de couplage profilée (22).

11. Dispositif selon la revendication 9 ou 10, **caractérisé en ce que** les organes de précontrainte (8) sont agencés à faible distance d'une périphérie de la plaque de base (2).
